# EUROPÄISCHE PATENTANMELDUNG

(11) **EP 4 183 725 A1**
(43) Veröffentlichungstag der Anmeldung: **24.05.2023**
(21) Anmeldenummer: 22207320.7
(22) Anmeldetag: 14.11.2022
(51) Int. Cl.: B65G 47/86

(54) **VORRICHTUNG UND VERFAHREN ZUM TRANSPORTIEREN VON BEHÄLTNISSEN MIT ROLLENGESTÜTZTEM STELLMECHANISMUS FÜR GREIFKLAMMERN**

(30) Priorität: 17.11.2021 DE 102021129959
(71) Anmelder: Krones AG, 93073 Neutraubling (DE)
(72) Erfinder: Heinrich, Dirk, 93073 Neutraubling (DE); Hoellriegl, Thomas, 93073 Neutraubling (DE); Stiegler, Markus, 93073 Neutraubling (DE); Fleischmann, Hans-Juergen, 93073 Neutraubling (DE); Habenschaden, Nina, 93073 Neutraubling (DE); Effenberger, Harald, 93073 Neutraubling (DE)
(74) Vertreter: Bittner, Bernhard

(57) **Zusammenfassung**

Vorrichtung zum Transportieren von Behältnissen mit einem bewegbaren und insbesondere drehbaren Träger, an dem eine Vielzahl von Greifeinrichtungen zum Greifen von Behältnissen angeordnet sind, wobei diese Greifeinrichtungen als Greifklammern ausgeführt sind, und diese Klammern jeweils wenigstens zwei Klammerarme aufweisen, die zwischen einer ersten Stellung, in der sie die zu transportierenden Behältnisse greifen, und einer zweiten Stellung bewegbar sind, wobei die Greifklammern Kontaktabschnitte aufweisen, welche dazu geeignet und bestimmt sind, die Behältnisse zu kontaktieren und wobei weiterhin ein Stellmechanismus vorgesehen ist, der dazu geeignet ist, die Greifeinrichtungen zwischen der ersten Stellung und der zweiten Stellung überzuführen, dadurch gekennzeichnet, dass dieser Stellmechanismus wenigstens ein an wenigstens einem der Klammerarme angeordnetes und bezüglich dieses Klammerarmes und bezüglich einer vorgegebenen Drehachse drehbares Rollenelement aufweist.

## Beschreibung

Die vorliegende Erfindung bezieht sich auf eine Vorrichtung und ein Verfahren zum Transportieren von Behältnissen. Aus dem Stand der Technik sind unterschiedlichste Vorrichtungen und Verfahren zum Transportieren von Behältnissen bekannt. Dabei ist es bekannt, dass Behältnisse, beispielsweise Kunststoffflaschen, an ihren Mündungen gegriffen werden und transportiert werden. So sind beispielsweise aus dem Stand der Technik Transfersterne (auch als Neckhandlingssterne bekannt) bekannt, welche mit ähnlicher Funktionsweise in Behälterbehandlungsmaschinen überall eingesetzt werden, um Behältnisse und insbesondere Flaschen in oder außerhalb der Maschinen oder Modulen zu transportieren.

Diese Neckhandlingssterne weisen üblicherweise eine Vielzahl von Klammerelementen auf, die an einer Scheibe oder ähnlichen Aufnahme befestigt sind. Der Aufbau bzw. Antrieb über eine Antriebsachse, bei der es sich beispielsweise um eine Sternsäule handelt, weist üblicherweise einen eigenen Motor auf oder wird durch Riemen angetrieben. Zum Öffnen oder Schließen dieser Klammern wird beispielsweise eine Rolle und Nocken mit einem Hebel verwendet.

Derzeit sind viele Systeme von verschiedenen Bereichen bzw. Maschinentypen im Einsatz, die bei Hochgeschwindigkeit die erwünschte Lebensdauer nicht mehr erreichen, bzw. den mechanischen Belastungen nicht mehr standhalten. Die Ansteuerung derartiger Klammern, die üblicherweise mit einer Drehnocke ausgeführt ist, verschleißt aufgrund der Gleitreibung relativ schnell.

Daneben sind zum Teil auch Mechanismen vorgesehen, die beispielsweise über zwei Blattfedern, die auf eine Drehnocke drücken. Hieraus ergibt sich eine bestimmte Gleitreibung. Bei der Ansteuerung zum Öffnen berühren die Rollen den Hebel nur kurz und über die Federkraft der Blattfedern springen die Klammern auf. Dadurch verliert die Rolle den Kontakt zum Hebel und es ist keine weiter begleitende Bewegung möglich, wodurch die Klammern ruckartig öffnen und der Hebel gegen einen Anschlagbolzen schlägt, der als Überschlagbegrenzung dient. Dies führt dazu, dass der Hebel noch etwas hin und her schwingt, bis er seine Endposition erreicht. Die geforderte Präzision ist jedoch bei Hochgeschwindigkeitstransportern meist unzureichend.

Der vorliegenden Erfindung liegt daher die Aufgabe zugrunde, den Verschleiß derartiger Anlagen auch für Hochgeschwindigkeitsanwendungen zu reduzieren. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Transportieren von Behältnissen weist einen beweglichen und insbesondere drehbaren Träger auf, an dem eine Vielzahl von Greifeinrichtung zum Greifen von Behältnissen angeordnet ist, wobei diese Greifeinrichtungen als Greifklammern ausgeführt sind und diese Greifklammern jeweils wenigstens zwei Klammerarme aufweisen, die zwischen einer ersten Stellung, in der sie die zu transportierenden Behältnisse greifen und einer zweiten Stellung bewegbar sind, wobei die Greifklammern Kontaktabschnitte aufweisen, welche dazu geeignet und bestimmt sind, die Behältnisse (insbesondere in der ersten Stellung) zu kontaktieren und wobei wenigstens ein Stellmechanismus vorgesehen ist, der dazu geeignet ist, die Greifeinrichtungen zwischen der ersten Stellung und der zweiten Stellung überzuführen (und oder die Greifeinrichtung von der ersten Stellung in die zweite Stellung zu überführen und/oder die Greifeinrichtung von der zweiten Stellung in die erste Stellung zu überführen).

Erfindungsgemäß weist dieser Stellmechanismus wenigstens ein an wenigstens einem der Klammerarme angeordnetes und bezüglich dieses Klammerelements und bezüglich einer vorgegebenen Drehachse drehbares Rollenelement auf.

Es wird daher vorgeschlagen, dass zum Öffnen und Schließen der Greifeinrichtungen ein Stellmechanismus verwendet wird, der an der Greifeinrichtung (bzw. an einem Element und/oder Abschnitt der Greifeinrichtung) selbst ein Rollenelement aufweist. Auf diese Weise kann durch eine abrollende Bewegung ein Überführen von einer ersten Position der Greifeinrichtung in eine zweite Position der Greifeinrichtung stattfinden.

Bevorzugt handelt es sich bei der ersten Position um eine geschlossene und/oder Greifposition, in der die Behältnisse gegriffen werden und bei der zweiten Position handelt es sich um eine gelöste Position, in der die Greifeinrichtungen bevorzugt nicht in Eingriff mit den Behältnissen sind (und/oder die Behältnisse von den Greifeinrichtungen entfernbar sind oder an diesen anbringbar sind). Besonders bevorzugt handelt es sich bei den Behältnissen um Kunststoffflaschen und/oder Glasflaschen. Daneben wäre es jedoch auch möglich, dass die Greifeinrichtungen Kunststoffvorformlinge greifen.

Die erfindungsgemäßen neuen Transporteinrichtungen bzw. Transfersterne sind mit einer neuen Ansteuerung verschleißärmer und präziser von der Klammerführung bzw. Lagerung. Die Ansteuerung der Greifeinrichtungen bzw. Klammereinrichtungen erfolgt bevorzugt über einen Nocken, der beispielsweise aus Metall bestehen kann und diese Bewegung auf die hier erwähnte Rolleneinrichtung, die in einem Bereich der Greifeinrichtung, beispielsweise am Ende der Klammer angeordnet ist, überträgt und dass Öffnen und/oder Schließen einleitet. Hier tritt aufgrund der Rollreibung weniger Verschleiß an den Funktionsteilen auf.

Bei einer bevorzugten Ausführungsform ist an beiden Klammerarmen wenigstens ein bezüglich des jeweiligen Klammerarms und bezüglich einer vorgegebenen Drehachse drehbares Rollenelement angeordnet. Bei dieser Ausgestaltung werden durch den Stellenmechanismus beide Klammerarme bewegt und beide Klammerarme werden unter Verwendung der besagten Rollenelemente bewegt.

Bei einer bevorzugten Ausführungsform ist die Drehachse wenigstens eines Rollenelements senkrecht zu einer Bewegungsebene, in der die Greifklammern zum Öffnen und Schließen der Greifeinrichtung bewegbar sind. Bevorzugt steht die Drehachse parallel zu der Längsrichtung der zu transportierenden Behältnisse. Bevorzugt steht die besagte Drehachse senkrecht zu der Transportebene der Behältnisse.

Bevorzugt ist das Rollenelement in einer Ausnehmung angeordnet, welche in einem Abschnitt des jeweiligen Klammerarms ausgebildet ist. Bevorzugt umgibt dabei diese Ausnehmung wenigstens einen Abschnitt des Rollenelements vollständig. Bevorzugt weist der jeweilige Klammerarm einen Hohlraum aus, der vollständig von dem Material des Klammerarms umgeben ist und in diesem Hohlraum ist das Rollenelement integriert. Auf diese Weise ist eine besonders stabile Lagerung des Rollenelements möglich.

Bei einer weiteren vorteilhaften Ausführungsform weisen die Behältnisse einen Grundkörper und einen Mündungsbereich mit einer Öffnung auf und die Greifeinrichtungen sind dazu geeignet und bestimmt, die Behältnisse in diesem Mündungsbereich zu greifen.

Bevorzugt weist das wenigstens eine Rollenelement einen Außenquerschnitt auf, welcher aus einer Gruppe von Außenquerschnitten ausgewählt ist, welche kreisförmige Querschnitte, elliptische Querschnitte, polygonale Querschnitte und dergleichen enthält. Besonders bevorzugt weist wenigstens ein Rollenelement und weisen bevorzugt beide Rollenelemente einen kreisförmigen Querschnitt auf.

Bei einer weiteren bevorzugten Ausführungsform sind die Greifeinrichtungen und/oder die Greifklammern wechselbar an dem Träger angeordnet. Auf diese Weise wäre einerseits eine Umstellung auf andere Behältnisse möglich, andererseits jedoch auch ein Auswechseln zu Wartungszwecken.

Bei einer weiteren bevorzugten Ausführungsform ist der erste Klammerarm bezüglich einer ersten Schwenkachse schwenkbar und der zweite Klammerarm ist bezüglich einer zweiten Schwenkachse schwenkbar, wobei bevorzugt diese Schwenkachsen zusammenfallen oder zueinander parallel sind. So wird es beispielsweise möglich, dass in der Schwenkachse die beiden Klammerarme über Kreuz liegen. Daneben wäre es jedoch auch möglich, dass die beiden Schwenkachsen zueinander parallel sind. In diesem Falle weisen bevorzugt die Schwenkachsen zueinander einen Abstand auf, der größer ist als 1 mm, bevorzugt größer als 3 mm, bevorzugt größer als 5 mm. Besonders bevorzugt ist dieser Abstand geringer als 10 cm, bevorzugt geringer als 8 cm, bevorzugt geringer als 5cm.

Bevorzugt sind die Klammerarme symmetrisch zueinander ausgebildet und/oder angeordnet.

Besonders bevorzugt ist die wenigstens eine Schwenkachse in einer Erstreckungsrichtung der Greifklammer zwischen den Kontaktabschnitten und den Rollenelementen angeordnet. Unter der Erstreckungsrichtung der Greifklammer wird bevorzugt eine Richtung verstanden, welche auch eine Symmetrieachse der Greifklammer bzw. eine Symmetrieebene darstellt.

Bei einer weiteren vorteilhaften Ausführungsform weist der Stellmechanismus ein bewegliches und insbesondere drehbares Stellglied auf, dessen Bewegung -bevorzugt unmittelbar - auf das wenigstens eine Rollenelement und bevorzugt auf beide Rollenelemente übertragbar ist. Besonders bevorzugt ist dieses bewegliche Stellglied metallisch ausgebildet. Bei einer weiteren vorteilhaften Ausführungsform weist wenigstens ein Rollenelement und weisen bevorzugt beide Rollenelemente eine Gummi-Außenoberfläche oder eine Außenoberfläche aus einem Kunststoff und/oder Elastomer auf.

Bevorzugt ist das Stellglied zwischen den beiden Rollenelementen angeordnet. Bei einer weiteren bevorzugten Ausführungsform ist das Stellglied um 360° und besonders bevorzugt um mehr als 360° in einer Drehrichtung drehbar. Bevorzugt bewirkt das Stellglied bei einer Drehung im gleichen Drehsinn ein abwechselndes Öffnen und Schließen der Greifeinrichtung.

Bei einer weiteren bevorzugten Ausführungsform ist das Stellglied ein entlang eines vorgegebenen Bewegungspfads hin- und her bewegbares Stellglied, welches bevorzugt mit dem Rollenelement oder den Rollenelementen in Kontakt steht. Durch diese reziprokierende Bewegung des Stellglieds wird bevorzugt ein Öffnen und Schließen der Greifeinrichtung verursacht.

Bei einer weiteren bevorzugten Ausführungsform steht das Stellglied in Kontakt mit dem oder den Rollenelementen und durch eine Bewegung des Stellglieds gegenüber den Rollenelementen wird eine Drehbewegung der Rollenelemente verursacht. Bevorzugt tritt zwischen dem Stellglied und dem oder den Rollenelementen Rollreibung auf.

Bei einer weiteren vorteilhaften Ausführungsform ist das Stellglied mit einem Hebelelement gekoppelt. So kann ein Hebelelement vorgesehen sein, das geschwenkt oder gedreht werden kann, wodurch gleichzeitig auch das besagte Stellglied gedreht wird. Bevorzugt ist das Hebelelement drehfest mit dem Stellglied gekoppelt.

Bei einer weiteren bevorzugten Ausführungsform ist das Stellglied mittels einer Lagereinrichtung drehbar gelagert.

Bei einer weiteren vorteilhaften Ausführungsform weist die Greifeinrichtung wenigstens ein federndes Element, beispielsweise eine Feder auf, welche bewirkt, dass ein Kontakt zwischen den Rollenelementen und dem Stellglied hergestellt wird. Weiterhin wäre es auch möglich, dass das besagte Stellglied durch Kurvensegmente angesteuert ist. Daneben wäre jedoch auch eine Fixierung über Magnete denkbar.

Bei einer bevorzugten Ausführungsform handelt es sich bei dem Stellglied um einen Nocken, welcher über einen Hebel mit einem hin und her Schwenken über eine Rolle betätigt wird. Diese Ansteuerung kann auch rotativ erfolgen mit einen sogenannten Kreuzhebel, der nur mehr von einer Position der Ansteuerrolle (beispielsweise an der Übergabestelle, an der ein Behältnis übergeben wird) betätigt wird.

Bevorzugt wird dieser Kreuzhebel bei der Ansteuerung beim Anfahren der Rollen um je einen Takt (90°) weitergedreht und so bleibt dieser einmal in einer offenen Stellung und bei der nächsten Ansteuerung in einer geschlossenen Stellung stehen.

Diese Stellung wird bevorzugt mit einer Rastfunktion in einem Nocken, der besonders bevorzugt eine Vertiefung aufweist, gehalten. Bei einer weiteren bevorzugten Ausführungsform weist der Nocken und/oder die Klammern eine Federung auf, um eine gewisse Vorspannung auf das Nockensystem zu geben und um das Einrasten, unter anderem auch ein spaltfreies Schließen der Klammern zu gewährleisten. Bevorzugt weist dieser Federnocken eine Feder auf, die bevorzugt in der Drehachse vorgesehen ist und hierdurch die Greifklammern gegen die Ansteuerrollen der Klammern drängt.

Bei einer anderen bevorzugten Ausführungsform weisen die federnden Klammereinrichtungen eine speziell eingearbeitete Kontur auf, die eine Federwirkung auf die befestigte Ansteuerrolle gibt und hier auch eine gewisse Vorspannung auf den in diesem Fall bevorzugt starren Nocken ausübt.

Bei einer weiteren Ausführungsform ist mit einem Schieber und einer Rollenansteuerung oder Kurvenhebel die Öffnen- und Schließbewegung durchführbar. Bei einer bevorzugten Ausführungsform erfolgt die Ansteuerung mit einer Rolle, die in einer Art Hebel sitzt und über zwei stationäre angeordnete Kurvensegmente angesteuert wird. Dabei sitzt bevorzugt in dem auslenkenden Teil des Hebels ein Mitnehmer, der einen Schieber mit einer Nockenkontur linear oder in einer gekrümmten Richtung betätigt und die Greifeinrichtungen über die Rollen öffnet oder schließt.

Bei den beiden Endstellungen ist der Rollenhebel (d.g. das Stellglied) bzw. die Klammer eingerastet oder wird von einem weiteren möglichen Bauteil, beispielsweise einem Magneten oder einem Raststück, fixiert.

Bei einer weiteren bevorzugten Ausführungsform ist das Schiebesystem identisch und die Ansteuerung wird mit einer Art Kurvenhebel betätigt. Hier sind zwei stationär angeordnete Rollen vorgesehen, die beim Vorbeifahren den Kurdenhebel und den Schieber betätigen.

Daneben kann weiterhin auch eine Schließfunktion mit einem Kurven-Nockensegment vorhanden sein, welches bevorzugt direkt an einem Ansteuerhebel sitzt und angesteuert wird.

Bei einer weiteren Version kann ein Schiebeelement auch über ein magnetisches Haltesystem in einer Endposition (insbesondere Klammer geschlossen) gehalten und die Endlage verstellt werden. Bei diesem Schiebeelement kann die Funktionsfläche trapezförmig gestaltet sein, um einen eventuellen Verschleiß nachstellen zu können.

Durch die Erfindung wird ein geringerer Verschleiß durch eine Rollreibung und ein präziseres Handling durch eine verbesserte Klammerlagerung erreicht. Durch die bevorzugte Vorspannung der Klammern bzw. der Klammerarme kann ein sicheres und präziseres Schließen und Einrasten der Klammern bzw. Klammerarme erfolgen.

Mit dem hier beschriebenen neuartigen Rotativsystem (beispielsweise ein Kreuzhebel) der Ansteuerung kann ein Aufschlagen des Ansteuerhebels des Nockens bzw. ein Anschlagen auf den Begrenzungsbolzen verhindert werden.

Bevorzugt führt der Kreuzhebel die Bewegung beim Vorbeifahren an der Rolle, da er diese umschlingt. Bevorzugt ist eine begleitende Bewegung der Rolle zum Hebel (über eine Rollreibung) vorgesehen.

Mit dem System wird nur eine Rollenposition pro Übergabe notwendig. Daneben ist es auch möglich, dass vier Anlageflächen anstelle nur zwei im Falle eines Schwenkhebels vorgesehen sind, wenn ein Kreuzhebel verwendet wird.

Bevorzugt findet in diesem Fall eine komplette rotative Bewegung anstelle eines ständigen hin und her Schwenkens statt. Bei dem Schwenkhebel kann bevorzugt durch ein zusätzliches Druckstück ein Überschlagen des Hebels gegen einen Anschlagbolzen vermieden werden.

Bei dem ebenfalls unten genauer beschriebenen Schiebesystem sind keine Ansteuerhebel im Einsatz, sondern bevorzugt größere Ansteuerrollen verbaut, die ein gleichmäßiges Abrollen bzw. einen flacheren Anfahrwinkel auf den Kurvenhebel oder die Kurvensegmente ermöglichen. Auf diese Weise ist ein ruhiger Lauf und ein geringerer Verschleiß zu erwarten. Weiterhin ist es möglich, eine Einstellmöglichkeit des Haltesegments vorzusehen.

Die vorliegende Erfindung ist weiterhin auf eine Greifeinrichtung zum Greifen von Behältnissen gerichtet. Diese Greifeinrichtung ist als Greifklammer ausgeführt, und diese Greifklammer weist wenigstens zwei Klammerarme auf, die zwischen einer ersten Stellung, in der die Greifeinrichtung die zu transportierenden Behältnisse greift und einer zweiten Stellung bewegbar sind, wobei die Greifklammern Kontaktabschnitte aufweisen, welche dazu geeignet und bestimmt sind, die Behältnisse zu kontaktieren und wobei weiterhin ein Stellmechanismus vorgesehen ist, der dazu geeignet ist, die Greifeinrichtungen zwischen der ersten Stellung der zweiten Stellung überzuführen.

Erfindungsgemäß weist dieser Stellmechanismus wenigstens ein an wenigstens einem der Klammerarme bezüglich dieses Klammerarmes und bezüglich einer vorgegebenen Drehachse drehbares Rollenelement auf.

Bei einer bevorzugten Ausführungsform weisen die Klammerarme spiegelbildliche Geometrien auf. Bevorzugt ist an beiden Klammerarmen ein Rollenelement angeordnet. Besonders bevorzugt sind die Rollenelemente an den Klammerarmen gleichartig bzw. identisch ausgebildet.

Die vorliegende Erfindung ist weiterhin auf eine Anlage zum Behandeln von Behältnissen mit einer ersten Behandlungseinheit, welche die Behältnisse in einer ersten vorgegebenen Weise behandelt und einer zweiten Behandlungseinheit, welche die Behältnisse in einer zweiten vorgegebenen Weise behandelt, gerichtet. Erfindungsgemäß weist die Anlage eine Transporteinrichtung der oben beschriebenen Art auf, welche die Behältnisse von der ersten Behandlungseinheit zu der zweiten Behandlungseinheit transportiert.

Dabei kann es sich bei der ersten Behandlungseinheit um eine Behandlungseinheit handeln, die aus einer Gruppe von Behandlungseinheiten ausgewählt ist, welche Umformungseinrichtungen zum Umformen von Kunststoffbehältnissen zu Kunststoffflaschen, Sterilisiereinrichtungen zum Sterilisieren von Behältnissen, Fülleinrichtungen zum Befüllen von Behältnissen, Verschließeinrichtungen zum Verschließen von Behältnissen oder dergleichen enthält.

Die vorliegende Erfindung ist weiterhin auf ein Verfahren zum Transportieren von Behältnissen mit einem bewegbaren und insbesondere drehbaren Träger gerichtet, an dem eine Vielzahl von Greifeinrichtungen zum Greifen von Behältnissen angeordnet ist, wobei diese Greifeinrichtungen als Greifklammern ausgeführt sind, und diese Klammern jeweils wenigstens zwei Klammerarme aufweisen, die zwischen einer ersten Stellung, in der sie die zu transportierenden Behältnisse greifen und einer zweiten Stellung bewegt werden, wobei die Greifklammern Kontaktabschnitte aufweisen, welche die Behältnisse kontaktieren und wobei weiterhin ein Stellmechanismus die Greifeinrichtungen zwischen der ersten Stellung der zweiten Stellung überführt.

Erfindungsgemäß weist dieser Stellmechanismus wenigstens ein an wenigstens einem der Klammerarme bezüglich dieses Klammerarmes und bezüglich einer vorgegebenen Drehachse drehbares Rollenelement aufweist.

Bevorzugt wirkt zum Öffnen und/oder Schließen der Greifeinrichtung das wenigstens eine Rollenelement mit einem Stellglied zusammen. Bei einem weiteren bevorzugten Verfahren wird ein Öffnen und Schließen durch einen rollenden Kontakt des Rollenelements mit einem weiteren Element bewirkt. Dabei kann dieses weitere Element (bei dem es sich insbesondere um das oben erwähnte Stellglied handelt) sowohl eine Drehbewegung durchführen als auch eine Verschiebung in einer vorgegebenen Verschiebungsrichtung.

Weitere Ausführungsformen und Vorteile ergeben sich aus den beigefügten Zeichnungen:
Darin zeigen:
- Fig. 1: eine Darstellung einer Transporteinrichtungen;
- Fig. 2a, 2b: zwei Darstellungen von Greifeinrichtungen nach dem Stand der Technik;
- Fig. 3: eine Darstellung einer Greifeinrichtung in einer ersten Ausführungsform;
- Fig. 4: eine Schnittdarstellung einer Greifeinrichtung;
- Fig. 5: eine weitere Darstellung einer erfindungsgemäßen Greifeinrichtung in einer zweiten Ausgestaltung;
- Fig. 6: eine weitere Ansicht der in Fig. 5 gezeigten Greifeinrichtung;
- Fig. 7a, 7b: die Darstellungen zweier Klammerarme;
- Fig. 8: eine Schnittdarstellung einer Greifeinrichtung;
- Fig. 9: eine weitere Schnittdarstellung einer Greifeinrichtung;
- Fig. 10: eine Darstellung einer Transporteinrichtung;
- Fig. 11: eine weitere Darstellung einer Greifeinrichtung in einer weiteren Ausführungsform;
- Fig. 12: eine Darstellung einer Greifeinrichtung mit Betätigungseinrichtung;
- Fig. 13a, 13b: zwei Darstellungen einer Greifeinrichtung in einer weiteren Ausführungsform;
- Fig. 14: eine Darstellung einer weiteren Ausführungsform einer Greifeinrichtung;
- Fig. 15a - 15d: vier Darstellungen einer Greifeinrichtung;
- Fig. 16a, 16b: zwei Darstellungen einer Greifeinrichtung in einer weiteren Ausgestaltung;
- Fig. 17a, 17b: zwei weitere Darstellungen einer Greifeinrichtung.

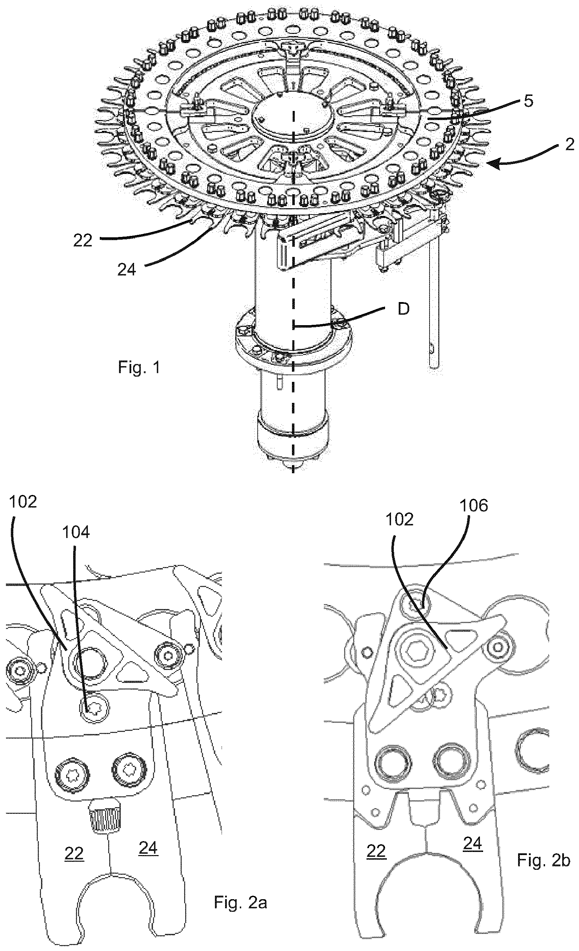

Figur 1 zeigt eine Vorrichtung 1 zum Transportieren von (nicht gezeigten) Behältnissen. Das Bezugszeichen 4 kennzeichnet einen drehbaren Träger, an dem eine Vielzahl von Greifeinrichtungen 2 angeordnet ist, welche hier zwei Greifklammern 22, 24 aufweisen. Der Träger 4 ist bezüglich einer Drehachse D drehbar.

Die Figuren 2a und 2b zeigen zwei Darstellungen von Greifeinrichtungen nach dem Stand der Technik. Diese weisen ein schwenkbares Stellglied 102 auf, welches hier durch zwei Nocken 104 und 106 in zwei unterschiedliche Stellungen schaltbar ist, um die Greifeinrichtung zu öffnen bzw. zu schließen. Damit erfolgt das Öffnen und Schließen hier durch Gleitreibung.

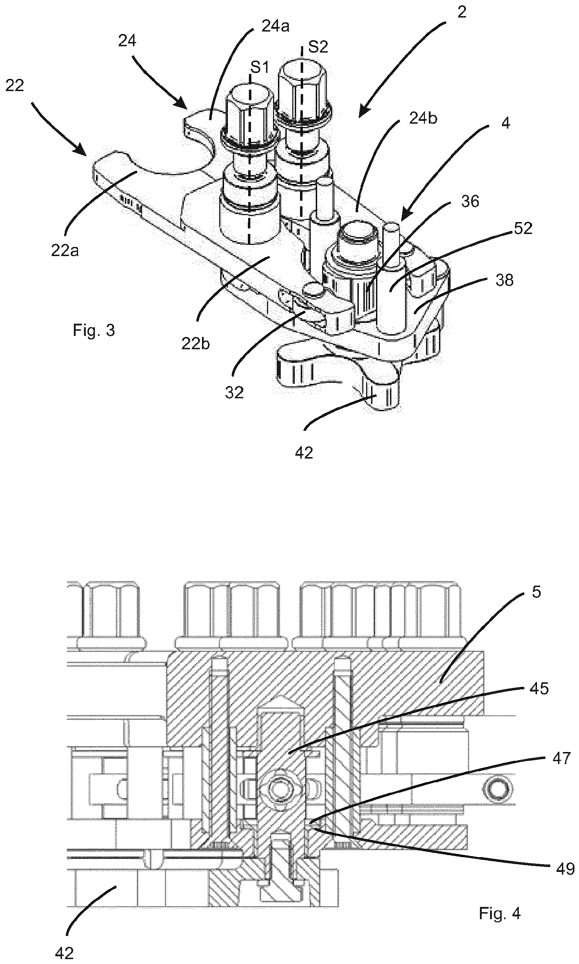

Figur 3 zeigt eine Darstellung einer erfindungsgemäßen Greifeinrichtung 2. Diese weist zwei Klammerarme 22, 24 auf, die wiederum Kontaktabschnitte 22a, 24a aufweisen, welche die (nicht gezeigten) Behältnisse kontaktieren.

Die Bezugszeichen S1 und S2 kennzeichnen zwei Schwenkachsen, um welche die Klammerarme 22, 24 schwenkbar sind. Die Bezugszeichen 22b und 24b kennzeichnen weitere Abschnitte der Klammerarme 22, 24, über welche die Öffnungs- und Schließbewegung eingeleitet wird. Zu diesem Zweck sind an diesen Abschnitten Rollenelemente 32, 34 (34 nicht gezeigt) angeordnet. Das Bezugszeichen 36 kennzeichnet ein Stellglied, welches diese Rollenelemente zum Öffnen und Schließen der Greifeinrichtung kontaktiert. Das Stellglied ist wiederum mit einem (Kreuz)Hebel 42 verbunden. Dieser Hebel 42 kann durch Nocken gedreht werden und auf diese Weise ein Öffnen und Schließen der Greifeinrichtung bewirken.

Bei der hier gezeigten Ausführungsform kann der Hebel 42 weitergedreht werden und je nach Drehstellung geht die Klammer jeweils von einem geöffneten in einen geschlossenen Zustand bzw. von einem geschlossenen Zustand in einen geöffneten Zustand über. Das Bezugszeichen 38 kennzeichnet einen Träger, an dem das Stellglied 36 angeordnet bzw. gelagert ist. Das Bezugszeichen 4 kennzeichnet den Stellmechanismus der Greifeinrichtung in seiner Gesamtheit. Damit wird hier ein Öffnen und ein Schließen durch ein Drehen des Stellglieds 36 bezüglich einer Drehachse erreicht.

Figur 4 zeigt eine Schnittdarstellung der in Figur 3 gezeigten Greifeinrichtung. Dabei ist insbesondere die drehbare Lagerung des Stellglieds erkennbar. Genauer ist ein drehbarer Bolzen 45 erkennbar, der drehfest mit dem Träger 5 und auch dem Hebel 42 verbunden ist. Diese Lagerung weist dabei bevorzugt auch eine Gleitlagerbuchse 49 und/oder eine Scheibe 47 (welche die gefederten Backen in der Höhe hält) auf.

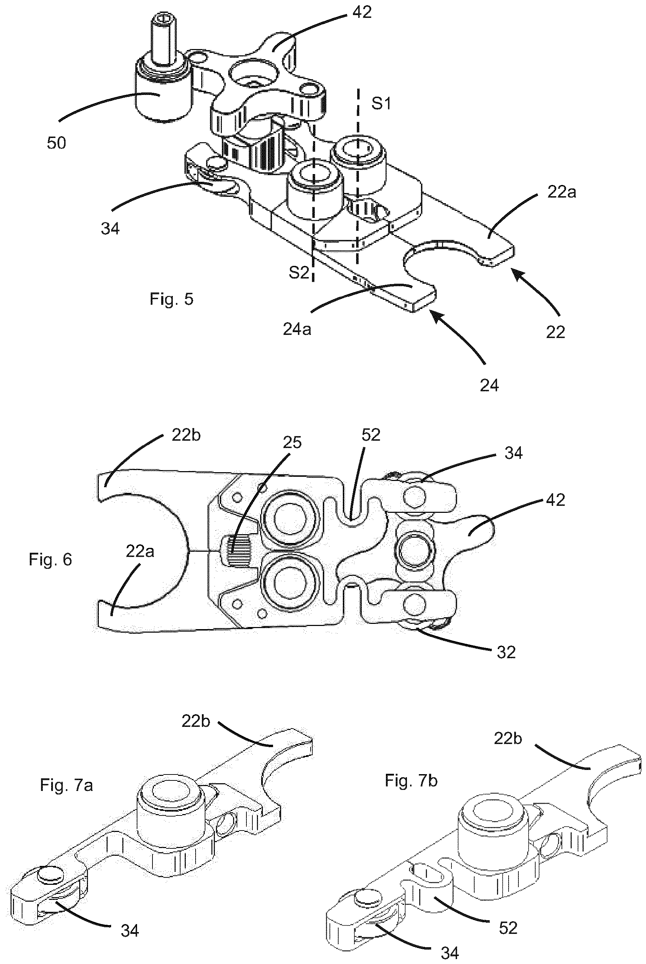

Figur 5 zeigt eine weitere Ausgestaltung einer Greifeinrichtung. Dabei ist auch hier wieder der Drehhebel 42 vorgesehen, der von einer Nocke 50 eine Stellung weiter bewegt werden kann, um die Greifeinrichtung zu öffnen bzw. zu schließen. In Figur 5 ist auch das zweite Rollenelement 34 dargestellt, welches an dem Klammerarm 24 angeordnet ist.

Figur 6 zeigt eine Draufsicht auf die Greifeinrichtung aus Figur 5. Bei dieser Ausgestaltung sind die beiden Rollenelemente 32 und 34 erkennbar, welche durch eine Drehung des Drehhebels 42 kontaktiert werden und so die Greifeinrichtung zwischen einer geöffneten einer geschlossenen Stellung schalten. Das Bezugszeichen 25 kennzeichnet ein Federelement, welches die Greifeinrichtung in eine geöffnete Stellung drängt. Das Bezugszeichen 52 kennzeichnet weitere federnde Abschnitte, welche einen sicheren Halt bzw. Eingriff der Rollenelemente mit dem Stellglied 36 bewirken bzw. diese Abschnitte in Richtung des Stellglieds vorspannen. Man erkennt Ausnehmungen des Stellglieds, welche Raststellungen definieren.

Die Figuren 7a und 7b zeigen die beiden Klammerarme, wobei auch hier wieder die Rollenelemente 34 und 32 gezeigt sind. Bei der in Figur 7b gezeigten Darstellung ist auch das zusätzliche Federelement 52 erkennbar.

Durch die Feder 25 zwischen den beiden Klammern springen die beiden Hälften nach der Ansteuerung direkt auf. Somit würde keine begleitende Bewegung der Rollen am Steuerelement 36 (vgl. Fig. 3) mehr stattfinden.

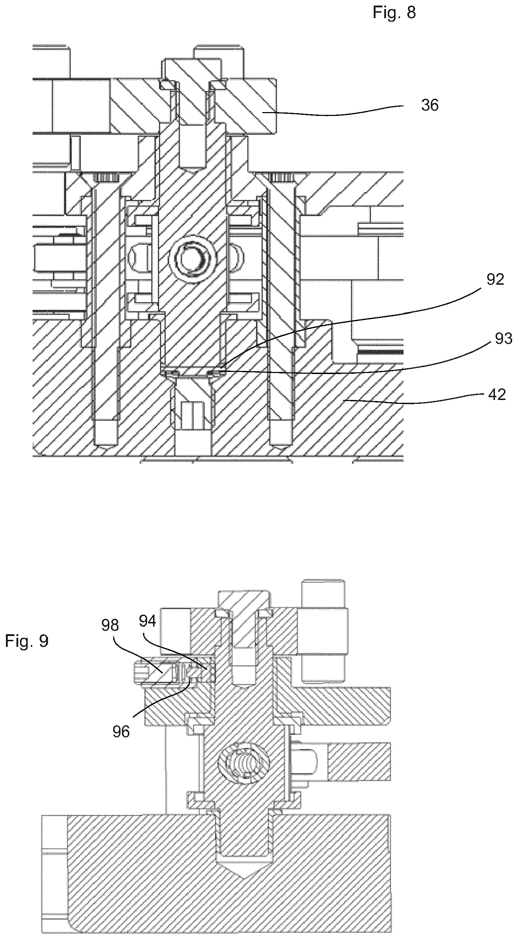

Figur 8 zeigt eine weitere Schnittdarstellung der in Figur 7 gezeigten Greifeinrichtung.

Durch eine Gleitscheibe 92 in der Lagerstelle unten kann eine Reibung auf das Stellglied 36 erzeugt werden. Dadurch wird das Überschlagen des Hebels (Figur 2b Position 102) gegen den Anschlagbolzen (auch in Figur 2b zu sehen) beim Öffnen der Klammern vermindert. Die Gleitscheibe 92 wird bevorzugt über Tellerfedern 93 an den Bolzen gedrückt. Über einen Gewindebolzen kann die Federkraft eingestellt werden.

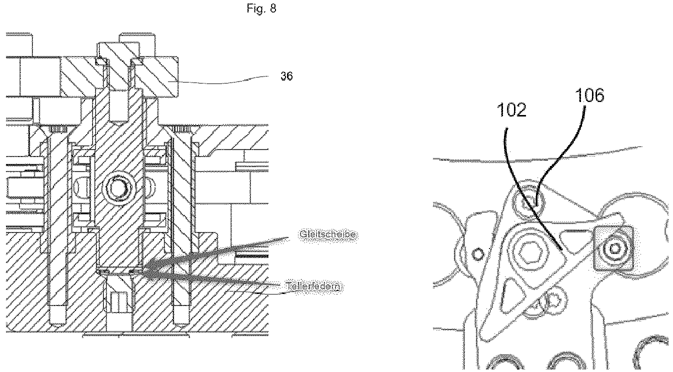

Figur 9 zeigt eine weitere Schnittdarstellung der Greifeinrichtung. Dabei ist auch hier wieder ein zusätzliches Druckstück 94 erkennbar, dass das Überschlagen des Hebels vermindert. Das Druckstück kann sowohl von unten als auch seitlich auf den Bolzen drücken. Das Bezugszeichen 98 kennzeichnet eine Einstellschraube und das Bezugszeichen 96 eine Feder.

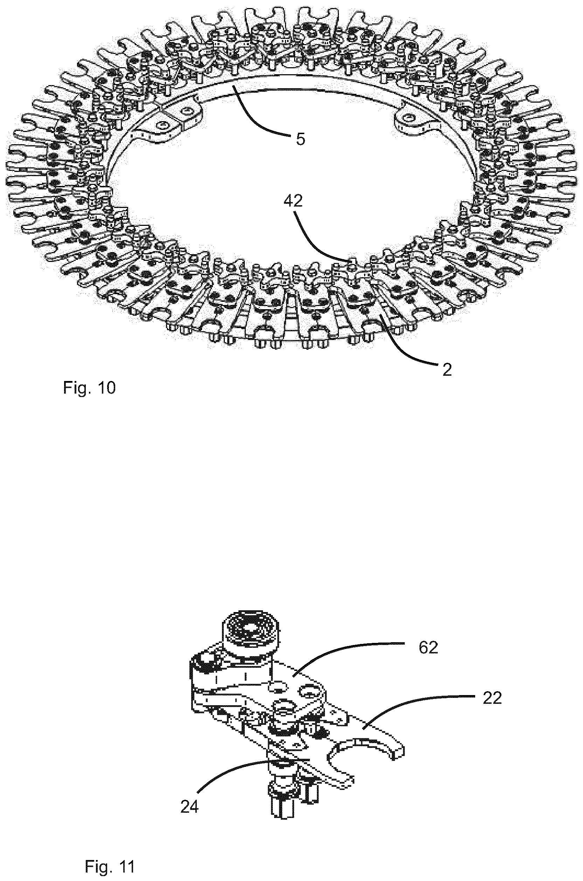

Figur 10 zeigt eine Transporteinrichtung mit erfindungsgemäßen Greifeinrichtungen 2. Das Bezugszeichen 5 kennzeichnet einen Träger, an dem die einzelnen Greifeinrichtungen 2 angeordnet sind. Das Bezugszeichen 42 kennzeichnet den Drehhebel, der jeweils zum Öffnen und Schließen der Greifeinrichtungen dient.

Figur 11 zeigt eine weitere Ausführungsform einer Greifeinrichtung, wobei hier wieder die beiden Klammerarme 22, 24 gezeigt sind, sowie einen Teil eines Stellmechanismus in Form eines Trägers 62. Anders als bei den obigen Ausgestaltungen wird hier ein Öffnen und Schließen der Greifeinrichtung durch eine Verschiebung eines Stellglieds bewirkt. Doch auch hier sind die Rollenelemente vorgesehen.

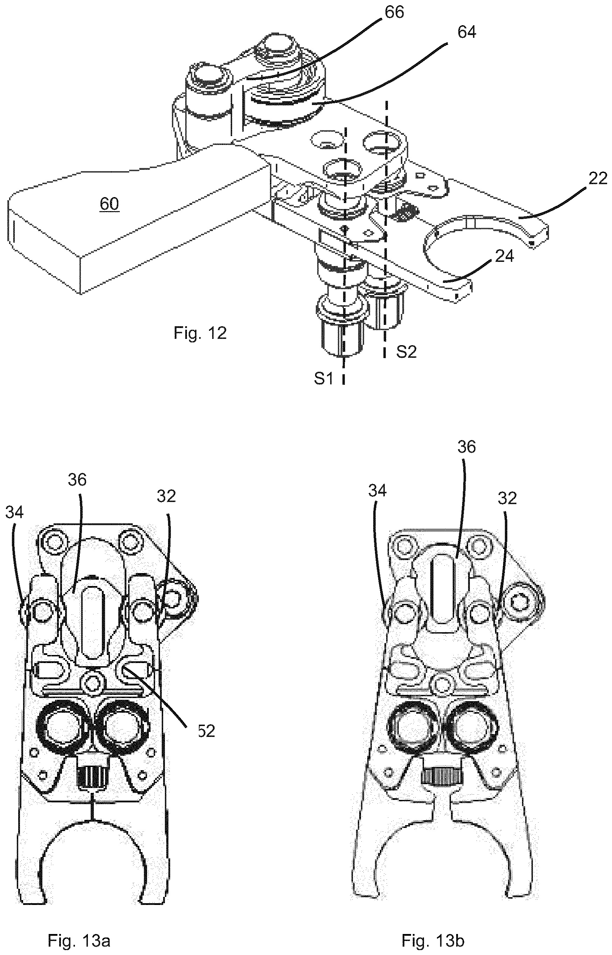

Figur 12 veranschaulicht die Funktionsweise der Greifeinrichtungen dieser Ausgestaltung. Während bei den vorangegangenen Ausgestaltungen das Öffnen und Schließen durch das Drehen eines Kreuzhebels bewirkt wird, erfolgt es hier durch eine lineare bzw. entlang eines Bewegungspfads erfolgenden Bewegung. Zu diesem Zweck ist eine weitere Kurvenrolle 64 an der Greifeinrichtung angeordnet.

Die Figuren 13a und 13b zeigen eine Öffnungs- und Schließstellung der Greifeinrichtung. Man erkennt das Stellglied 36, welches in Figur 13a und13b in zwei unterschiedlichen Stellungen ist. Dieses Stellglied bewirkt über die Rollenelemente 32 und 34 ein Öffnen der Greifklammer, d.h. dass die Rollelemente auch hier gegenüber dem Stellglied abrollen. Die Bewegung dieses Stellglieds 36 wird durch die Rolle 64 und eine (beispielsweise konstante bzw. stationäre) Nocke 60 erreicht).

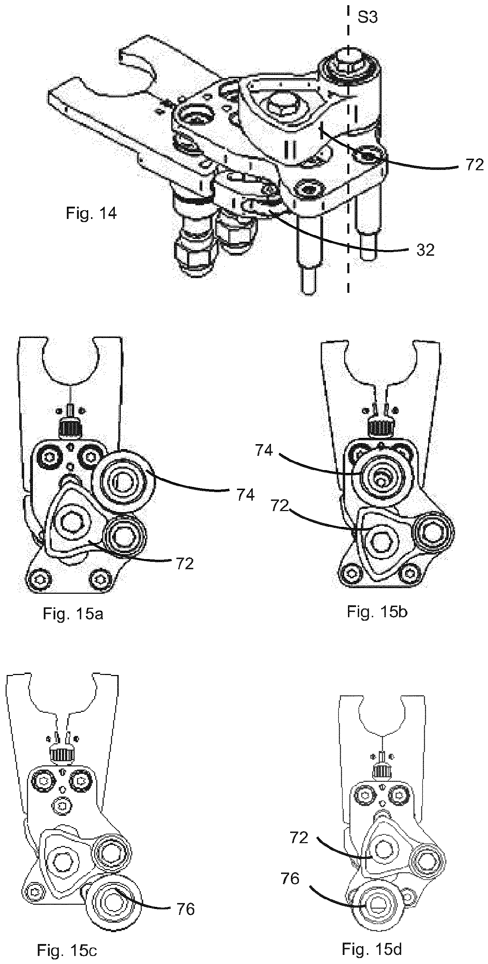

Figur 14 zeigt eine weitere Ausgestaltung einer Greifeinrichtung, wobei auch hier das Öffnen und Schließen durch eine hin und her Bewegung eines Stellglieds erreicht wird. Zu diesem Zweck ist ein beweglicher Körper 72 vorgesehen, der bezüglich einer Schwenkachse S3 schwenkbar ist.

Die Figuren 15a und 15b zeigen die Überführung der Greifeinrichtung durch eine erste Nocke 74. Diese bewegt den Hebel 72 hier von einer oberen in eine untere Stellung und damit löst sie auch das Öffnen und Schließen bzw. hier das Überführen von einer geöffneten Stellung in eine geschlossene Stellung aus.

Die Figuren 15c und 15d zeigen den umgekehrten Weg des Schließens, wobei hier der Hebel durch eine weitere Führungsrolle 76 wieder nach oben geschwenkt wird, um die Greifeinrichtung von der geöffneten in eine geschlossene Stellung zu überführen.

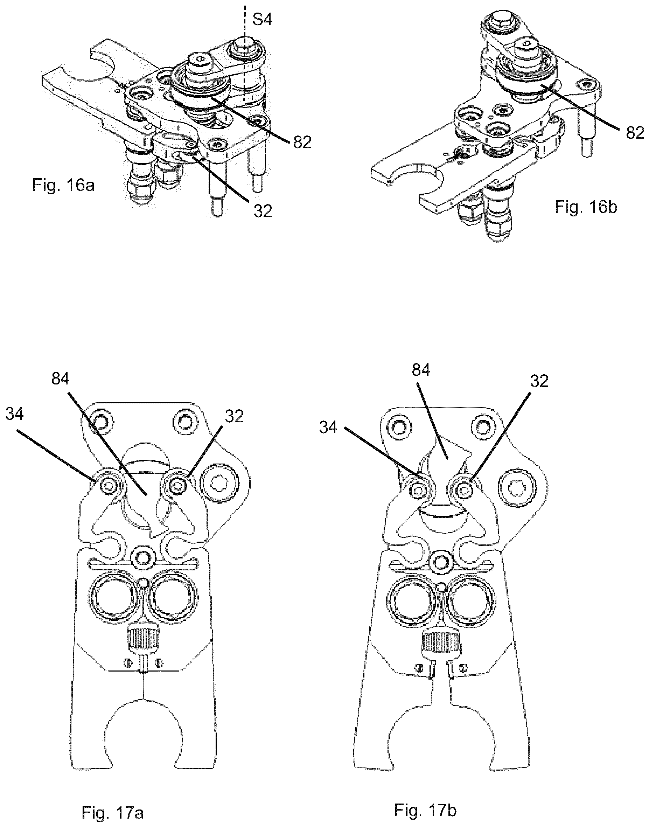

Die Figuren 16a, 16b zeigen eine weitere Ausgestaltung der Greifeinrichtung. Hierbei ist die Öffnen- und Schließfunktion mit einem Kurvennockensegment 82 ausgestattet, welches hier direkt an dem Ansteuerhebel angeordnet ist. Durch ein Schwenken des Elements 82 wird eine Verschiebung von der Öffnungs- in die Schließstellung erreicht.

Die Figuren 17a und 17b zeigen entsprechend die Bewegung des Stellglieds 84, um die Greifeinrichtung von einer geschlossenen Stellung (vgl. Figur 17a) in eine geöffnete Stellung (vgl. Figur 17b) zu überführen. Dieses Stellglied bzw. Schiebeelement kann hier und auch in den obigen Ausgestaltungen auch über ein magnetisches Haltesystem in einer Endposition (Klammer geschlossen) gehalten werden.

Die Anmelderin behält sich, vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Transportieren von Behältnissen (10) mit einem bewegbaren und insbesondere drehbaren Träger (5), an dem eine Vielzahl von Greifeinrichtungen (2) zum Greifen von Behältnissen angeordnet sind, wobei diese Greifeinrichtungen (2) als Greifklammern ausgeführt sind, und diese Klammern jeweils wenigstens zwei Klammerarme (22, 24) aufweisen, die zwischen einer ersten Stellung, in der sie die zu transportierenden Behältnisse greifen, und einer zweiten Stellung bewegbar sind, wobei die Greifklammern (22, 24) Kontaktabschnitte (22a, 24a) aufweisen, welche dazu geeignet und bestimmt sind, die Behältnisse zu kontaktieren und wobei weiterhin ein Stellmechanismus (4) vorgesehen ist, der dazu geeignet ist, die Greifeinrichtungen (2) zwischen der ersten Stellung und der zweiten Stellung überzuführen, **dadurch gekennzeichnet, dass**
dieser Stellmechanismus wenigstens ein an wenigstens einem der Klammerarme (22, 24) angeordnetes und bezüglich dieses Klammerarmes und bezüglich einer vorgegebenen Drehachse drehbares Rollenelement (32, 34) aufweist.

2. Vorrichtung (1) nach Anspruch 1,
**dadurch gekennzeichnet, dass**
an beiden Klammerarmen (22, 24) wenigstens ein bezüglich dieses jeweiligen Klammerarmes und bezüglich einer vorgegebenen Drehachse drehbares Rollenelement (32, 34) angeordnet ist.

3. Vorrichtung (1) nach wenigstens einem der vorangegangenen Ansprüche,
**dadurch gekennzeichnet, dass**
die Drehachse wenigstens eines Rollenelements senkrecht zu einer Bewegungsebene steht, in der die Greifklammern zum Öffnen und Schließen der Greifeinrichtung bewegbar sind.

4. Vorrichtung (1) nach wenigstens einem der vorangegangenen Ansprüche,
**dadurch gekennzeichnet, dass**
die Behältnisse einen Grundkörper (10a) und einen Mündungsbereich (10b) mit einer Öffnung aufweisen und die Greifeinrichtungen dazu geeignet und bestimmt sind, die Behältnisse in dem Mündungsbereich zu greifen.

5. Vorrichtung (1) nach wenigstens einem der vorangegangenen Ansprüche,
**dadurch gekennzeichnet, dass**
das wenigstens eine Rollenelement einen Außenquerschnitt aufweist, welcher aus einer Gruppe von Außenquerschnitten ausgewählt ist, welche kreisförmige Querschnitte, elliptische Querschnitte, polygonale Querschnitte und dergleichen enthält.

6. Vorrichtung (1) nach wenigstens einem der vorangegangenen Ansprüche,
**dadurch gekennzeichnet, dass**
die Greifeinrichtungen (2) und/oder die Greifklammern wechselbar an dem Träger angeordnet sind.

7. Vorrichtung (1) nach wenigstens einem der vorangegangenen Ansprüche,
**dadurch gekennzeichnet, dass**
der erste Klammerarm (22) bezüglich einer ersten Schwenkachse schwenkbar ist und der zweite Klammerarm (24) bezüglich einer zweiten Schwenkachse schwenkbar ist, wobei bevorzugt diese Schwenkachsen zusammenfallen oder zueinander parallel sind.

8. Vorrichtung (1) nach dem vorangegangenen Anspruch,
**dadurch gekennzeichnet, dass**
die wenigstens eine Schwenkachse in einer Erstreckungsrichtung (E) der Greifklammer zwischen den Kontaktabschnitten (22a, 24a) und den Rollenelementen (32, 34) angeordnet sind.

9. Vorrichtung (1) nach wenigstens einem der vorangegangenen Ansprüche,
**dadurch gekennzeichnet, dass**
der Stellmechanismus ein bewegliches und insbesondere drehbares Stellglied aufweist, dessen Bewegung unmittelbar auf das wenigstens eine Rollenelement (32, 34) übertagbar ist.

10. Vorrichtung (1) nach dem vorangegangenen Anspruch,
**dadurch gekennzeichnet, dass**
dieses Stellglied mit einem Hebelelement gekoppelt ist.

11. Greifeinrichtung zum Greifen von Behältnissen wobei die Greifeinrichtung (2) als Greifklammer ausgeführt ist, und diese Greifklammer wenigstens zwei Klammerarme (22, 24) aufweist, die zwischen einer ersten Stellung, in der sie die zu transportierenden Behältnisse greift und einer zweiten Stellung bewegbar sind, wobei die Greifklammern (22, 24) Kontaktabschnitte (22a, 24a) aufweisen, welche dazu geeignet und bestimmt sind, die Behältnisse zu kontaktieren und wobei weiterhin ein Stellmechanismus (4) vorgesehen ist, der dazu geeignet ist, die Greifeinrichtung (2) zwischen der ersten Stellung der zweiten Stellung überzuführen,
**dadurch gekennzeichnet, dass**
dieser Stellmechanismus wenigstens ein an wenigstens einem der Klammerarme (22, 24) bezüglich dieses Klammerarmes und bezüglich einer vorgegebenen Drehachse drehbares Rollenelement (32, 34) aufweist.

12. Greifeinrichtung (2) nach dem vorangegangenen Anspruch,
**dadurch gekennzeichnet, dass**
die Klammerarme einander spiegelbildliche Geometrien aufweisen.

13. Anlage zum Behandeln von Behältnissen mit einer ersten Behandlungseinheit, welche die Behältnisse in einer ersten vorgegebenen Weise behandelt und einer zweiten Behandlungseinheit, welche die Behältnisse in einer zweiten vorgegebenen Weise behandelt,
**dadurch gekennzeichnet, dass**
die Anlage eine Transporteinrichtung nach wenigstens einem der vorangegangenen Ansprüche aufweist, welche die Behältnisse von der ersten Behandlungseinheit zu der zweiten Behandlungseinheit transportiert.

14. Verfahren zum Transportieren von Behältnissen (10) mit einem bewegbaren und insbesondere drehbaren Träger, an dem eine Vielzahl von Greifeinrichtungen (2) zum Greifen von Behältnissen angeordnet sind, wobei diese Greifeinrichtungen (2) als Greifklammern ausgeführt sind, und diese Klammern jeweils wenigstens zwei Klammerarme (22, 24) aufweisen, die zwischen einer ersten Stellung, in der sie die zu transportierenden Behältnisse greifen und einer zweiten Stellung bewegt werden, wobei die Greifklammern (22, 24) Kontaktabschnitte (22a, 24a) aufweisen, welche die Behältnisse kontaktieren und wobei weiterhin ein Stellmechanismus (4) die Greifeinrichtungen (2) zwischen der ersten Stellung der zweiten Stellung überführt,
**dadurch gekennzeichnet, dass**
dieser Stellmechanismus wenigstens ein an wenigstens einem der Klammerarme (22, 24) bezüglich dieses Klammerarmes und bezüglich einer vorgegebenen Drehachse drehbares Rollenelement (32, 34) aufweist.
